# EUROPEAN PATENT APPLICATION

(11) **EP 0 721 890 A1**
(43) Date of publication of application: **17.07.1996**
(21) Application number: 96200069.1
(22) Date of filing: 12.01.1996
(51) Int. Cl.: B65B 43/46, B65B 23/08, B65G 47/90

(54) **Gripper for at least one object carrier**

(30) Priority: 12.01.1995 NL 9500064
(71) Applicant: FPS Food Processing Systems B.V., NL-3771 VE Barneveld (NL)
(72) Inventor: van der Schoot, Jelle, NL-7121 AL Aalten (NL)
(74) Representative: Smulders, Theodorus A.H.J., Ir.

(57) **Abstract**

A gripper for picking up one object carrier (T), such as for instance an egg tray (T), the gripper comprising two gripper elements (1) which, at least by the free ends (1a) thereof, are movable away from and towards each other, the gripper elements (1) being arranged for engagement on or around at least a part of the free circumferential edges (O) of the object carrier (T), wherein the gripper comprises at least one hook-shaped element (11) which in a first position engages a central portion (M) of the object carrier (T) and in a second position clears the central portion (M) of the tray (T).

## Description

This invention relates to a gripper according to the preamble of claim 1.

Such a gripper is described, for instance, in NL-9201530.

A drawback of the known gripper is that it supports the object carrier, such as for instance an egg tray, only on a part of the free circumferential edges thereof. As a result, a tray is liable to buckle or to sag to an unallowable extent, so that the objects located in the central portion of the tray contact each other, which may give rise to damage to the objects. If the objects are, for instance, large eggs, the sagging of the tray may lead to breakage of the eggs.

The object of the invention is to solve this problem. To that end, the gripper described in the preamble of claim 1 is characterized by the features recited in the characterizing portion of claim 1.

The hook-shaped elements, which are preferably located centrally between the gripper elements, positively engage a central portion of the tray and thus prevent the risk of sagging of the central portion of the tray. The engagement by the hook-shaped elements is effected as the free ends of the gripper elements are moved towards each other, so that the central portion is fixed in vertical direction relative to the gripper before the tray is lifted by the gripper. Prior to the time of engagement by the hook-shaped elements, the tray cannot be subject to sagging yet, since the tray is supported by a supporting surface, while after the engagement by the hook-shaped elements has been effected, the tray, at least the central portion thereof, cannot sag anymore, so that the tray can be quietly picked up by the gripper. From the first position, the hook-shaped elements can be moved to the second position, for instance away from each other, or, conversely, towards each other when the tips of the hook-shaped elements are directed away from each other. In some cases, only one hook-shaped element may suffice.

It is noted that hook-shaped elements for engaging a central portion of an egg tray are known per se from FR-A-2,270,148. The known proposal, however, does not relate to a gripper intended for picking up a filled egg tray. The problem of sagging of a filled egg tray is not addressed in this publication. The known device is only intended for taking a single egg tray off a stack of egg trays.

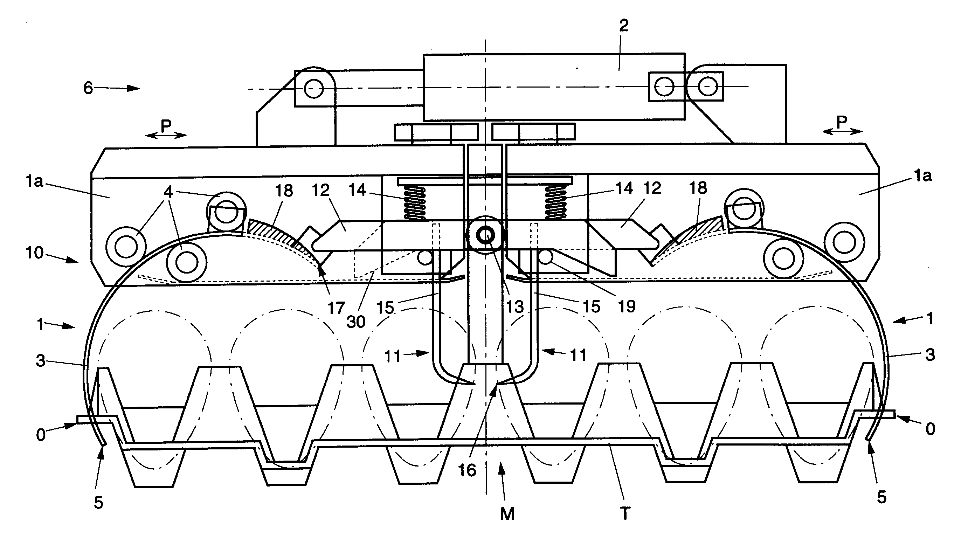

A further elaboration of the invention is described in the subclaim and will be further clarified on the basis of exemplary embodiments, with reference to the drawing.

The drawing is a side elevation of a gripper 10 for picking up one object carrier T, being an egg tray in the exemplary embodiment shown. However, with a gripper according to the invention, other objects, such as dishes and the like, can be picked up as well.

The gripper 10 comprises two gripper elements 1 which, at least by the free ends 1a thereof, are movable away from and towards each other, as indicated by arrow P, by means of a suitable drive mechanism 2, for instance a motor and screw spindle or a piston assembly or a rod assembly. Each gripper element 1 is arranged for engaging around at least a part of a free circumferential edge O of the tray T. To that end, each gripper element 1 comprises a circular segment-shaped plate member 3 which is guided between a number of rollers 4, in such a manner that the plate member 3 can move along a circular path. As a result, the free longitudinal edge 5 of the plate member 3 can be moved past the circumferential edge O at a short distance therefrom, between a first position wherein the free longitudinal edge 5 abuts against the underside of the egg tray T, and a second position wherein the free longitudinal edge 5 extends freely above the top of the egg tray T. During the movement of the plate members 3 from the first to the second position *vice versa*, the distance between the plate members 3 does not change. With the plate members 3 in the first position, the gripper elements 1 can be moved apart so far that the free longitudinal edges 5 of the plate members 3 allow free passage of the egg tray T, and be moved towards each other so far that the egg tray T is locked between the plate members 3 without requiring that the plate members be rotated from the position assumed. The gripper 10 is preferably movable in vertical and horizontal direction by lifting means 6.

Picking up a filled egg tray T using the known gripper described in the introduction hereof involves the risk of the egg tray sagging in the central area M, so that the eggs may butt against each other and break while moreover the egg tray T may be damaged. To prevent this, the gripper 10, as shown in the drawing, comprises adjacent the central area M thereof at least one pair of hook elements 11, each mounted on a swiveling arm 12. The swiveling arms 12 are each bearing-mounted on a pivot 13 which is fixedly arranged in the central area M of the gripper 10. The hook elements are biased into the first position by a spring 14. The hook elements 11 comprise a substantially straight body 15 which at the upper end is mounted against the swiveling arm 12 and at the other end merges into a bent tip 16. In the embodiment shown in the drawing, the two tips 16 are directed towards each other. At the underside, the swiveling arms 12 comprise a rise surface 30 adapted for cooperation with a guiding pin 19 fixedly connected to each of the ends 1a. On the side 17 remote from the free longitudinal edge 5, the two plate members 3 comprise butting means adapted for cooperation with the swiveling arms 12.

The gripper 10 can be used as follows.

The plate members 3 are brought into the first position and the hook elements 11 are biased into the substantially vertical position by the springs 14. Upon subsequent or prior displacement of the gripper elements 1 away from each other, the hook elements 11 are rotated apart, as a result of which the second position is assumed. As the ends 1a are being moved apart, the rotation of the hook elements 11 is obtained in that the guiding pin 19 abuts against the rise surface 30 of the swiveling arm 12. The proximal end of the swiveling arm 12 is thereby pressed in upward direction, with the hook element 11 mounted on the swiveling arm 12 thereby being carried along. Then the gripper 10 is moved above an egg tray T and moved down, so far that the free longitudinal edges 5 of the plate members 3 are disposed below the level of the circumferential edge of the egg tray T and preferably below the underside thereof. Thereafter the ends 1a are moved towards each other, in such a manner that the egg tray T is locked between the plate members 3. As the ends 1a are being moved towards each other, the hook elements 11 are pressed back into the vertical position by the springs 14, since the guiding pins 19 are moved away under the rise surfaces 30. The tips 16 are thereby pressed into, or at least against, the egg tray T in a central area M thereof. The material of the egg tray T may thereby be pierced or holes may have been provided beforehand or the hook elements may engage in a different way.

After the gripper elements 1 have been moved towards each other, against the egg tray T, and the tips 16 of the hook elements 11 have thereby been pressed into the egg tray T, the egg tray can be picked up and moved by the gripper 10 without any risk of the egg tray T sagging, since the central area M is carried directly by the gripper 10 by means of the hook elements 11. Using the gripper 10, the egg tray T can subsequently be introduced into a box closely fitting the circumferential edge O, with the plate members 3, by the outside thereof, being guided approximately along the inside of the box. After the egg tray T is supported in the box, for instance on the bottom thereof or on another tray, the plate members 3 can be rotated to the second position, with the free longitudinal edge 5 being moved between the circumferential edge O and the inside of the box. Just before the plate members 3 reach the second position, the butting means 18 butt against the ends of the swiveling arms 12, whereby, upon further rotation of the plate members 3, the swiveling arms 12 are caused to pivot in such a manner that the hook elements 11 are tilted and the tips 16 are pulled from the egg tray T. In other words, by pivotal movement of the swiveling arms 12 and the hook elements 11, the hook elements 11 are brought into the second position and the gripper 10 can be moved vertically upwards without the egg tray T thereby being picked up. As a result, the gripper is clear for picking up a further egg tray.

In an alternative embodiment, the hook elements can be moved in the opposite direction from the first to the second position or the swiveling arms may be replaced by, for instance, sliding arms, pistons, or other comparable means for moving the hook elements. If the gripper elements 1 can be moved apart freely when releasing the egg tray T or like object to be picked up, for instance because the egg tray T is deposited in a position free on all sides, the hook elements 11 can simply be moved apart along with the ends 1a being moved apart. Further, in particular when the carriers are sufficiently robust or preperforated, only one hook element may suffice. Furthermore, a number of hook elements 11 or pairs of hook elements 11 may be arranged, as viewed in the drawing, one behind the other and/or optionally side by side, also allowing more than one egg tray or like object to be picked up and manipulated simultaneously.

The invention is not in any way limited to the embodiments as described and shown in the specification. Many modifications are possible. For example, the gripper elements can be designed differently, for instance as fixedly mounted or tiltable hooks, and the plate members 3 described may also be brought into the first position by rotation. Further, the arrangement of the hook elements can be chosen differently, depending on the objects to be picked up. These and many other modifications are understood to fall within the scope of the invention.

## Claims

1. A gripper for picking up one object carrier (T), such as for instance an egg tray (T), the gripper comprising at least two gripper elements (1) which, at least by the free ends (1a) thereof, are movable away from and towards each other, said gripper elements (1) being arranged for engagement on or around at least a part of the free circumferential edges (O) of the object carrier (T), characterized in that the gripper comprises at least one hook-shaped element (11) which in a first position engages a central portion (M) of the object carrier (T) and in a second position clears the central portion (M) of the object carrier (T).

2. A gripper according to claim 1, characterized in that at least two hook elements (2) are arranged, which are movable relative to each other between the first and the second position.
